# EUROPEAN PATENT SPECIFICATION

(11) **EP 4 167 646 B1**
(45) Date of publication and mention of the grant of the patent: **09.07.2025**
(21) Application number: 21202264.4
(22) Date of filing: 12.10.2021
(51) Int. Cl.: H04W 48/04, H04W 48/16, H04W 48/20, H04W 84/06, H04B 7/185

(54) **METHOD FOR CONDUCTING NETWORK SELECTION AND/OR CELL SELECTION OF A USER EQUIPMENT WITH REGARD TO A MOBILE COMMUNICATION NETWORK, USER EQUIPMENT, SYSTEM OR MOBILE COMMUNICATION NETWORK, PROGRAM AND COMPUTER-READABLE MEDIUM**
VERFAHREN ZUR DURCHFÜHRUNG EINER NETZWERKAUSWAHL UND/ODER ZELLENAUSWAHL EINES BENUTZERGERÄTS BEZÜGLICH EINES MOBILKOMMUNIKATIONSNETZWERKS, BENUTZERGERÄT, SYSTEM ODER MOBILKOMMUNIKATIONSNETZWERK, PROGRAMM UND COMPUTERLESBARES MEDIUM
PROCÉDÉ PERMETTANT D'EFFECTUER LA SÉLECTION D'UN RÉSEAU ET/OU LA SÉLECTION DE CELLULE D'UN ÉQUIPEMENT UTILISATEUR CONCERNANT UN RÉSEAU DE COMMUNICATION MOBILE, ÉQUIPEMENT UTILISATEUR, SYSTÈME OU RÉSEAU DE COMMUNICATION MOBILE, PROGRAMME ET SUPPORT LISIBLE PAR ORDINATEUR

(43) Date of publication of application: 19.04.2023
(73) Proprietor: Deutsche Telekom AG, 53113 Bonn (DE)
(72) Inventor: KLATT, Axel, 50999 Köln (DE)
(74) Representative: Schwöbel, Thilo K.

(56) References cited:
- WO-A1-2021/075884
- US-A1- 2021 143 897
- US-A1- 2021 242 933
- US-A1- 2021 306 869

## Description

### BACKGROUND

The present invention relates a method for conducting network selection and/or cell selection of a user equipment with regard to a mobile communication network, wherein the mobile communication network comprises or uses or is associated or assigned to a radio access network comprising at least one base station entity being an air-based or a space-based base station entity.

Furthermore, the present invention relates to a user equipment for conducting network selection and/or cell selection with regard to a mobile communication network, the mobile communication network comprising or using or being associated or assigned to a radio access network comprising at least one base station entity being an air-based or a space-based base station entity.

Additionally, the present invention relates to a system for conducting network selection and/or cell selection of a user equipment with regard to a mobile communication network, the system comprising a global navigation satellite system, wherein the mobile communication network comprises or uses or is associated or assigned to a radio access network comprising at least one base station entity being an air-based or a space-based base station entity.

Furthermore, the present invention relates to a program and to a computer-readable medium for conducting network selection and/or cell selection according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G radio access technologies (referring to the different generations of radio access technologies) and typically comprise (or consist of) cells (or radio cells) of one or a plurality of the respective radio access technology/radio access technologies, which are typically organized throughout a country (or a part of or a region within a country) in a repeating pattern of (radio) cells (and associated base station entities) which belong to (or are used by or associated or assigned to) a mobile network operator (MNO).

Typically, in such cellular mobile communication networks, and especially in cellular networks according to the 3GPP standard or one of the 3GPP standards, a network (or a public land mobile network) needs to be selected and/or a radio cell (or network cell) needs to be selected by a considered user equipment - also referred to as network selection (or public land mobile network selection) and/or cell selection, respectively.

Network selection or public land mobile network (PLMN) selection (by a user equipment of the mobile communication network or trying to camp on or register to the mobile communication network) typically requires the selection of a network (or PLMN), by the considered user equipment, based on settings of the subscriber identity module or universal integrated circuit card (SIM/UICC, typically as part of or integrated in or connected to the user equipment or corresponding device) and the availability of radio cells of the selected network/PLMN (typically either a home PLMN (or home network) or visited PLMN (or visited network)).

In conventional mobile communication networks, the first step a user equipment is typically performing at switch-on, is the PLMN (or network) selection process (cf. 3GPP TS 22.011, 3GPP TS 23.122) followed by the cell selection process of a suitable radio cell belonging to the selected PLMN or network (cf. 3GPP TS 36.304 for LTE and 3GPP TS 38.304 for NR) in order to register to the PLMN or network.

It is furthermore known that the coverage area of a mobile communication network or PLMN is limited to a country (i.e. its borders) as such: i.e. at the borders of a country the coverage aera typically ends before, at or a bit after the border line. In case of crossing the border another mobile communication network (i.e. a new PLMN) is selected by the user equipment and thus the user equipment roams in a visited mobile communication network (or PLMN) of the visited country (here a neighboring country). For example, in Germany, Telekom Deutschland has been assigned with the PLMN ID 262-01 (MCC+MNC) which is broadcast by every radio cell (on any radio access technology) inside the German territory. Regulatory requirements define maximum allowed signal strength values (of radio signals) at the borderline, hence there is no completely sharp end of the coverage (and cannot be due to physics; radio waves do not stop at borders).

However, new and innovative transmission concepts for cellular networks especially also involve air-based and/or space-based base station entities (i.e. base station entities that are generally not immobile such as terrestrial base station entities). Examples of such air-based and/or space based base station entities include, e.g., mobile satellite connectivity with low earth orbit (LEO) satellites, medium earth orbit (MEO) satellites and/or geostationary earth orbit (GEO) satellites and also so-called high altitude platforms or high altitude pseudo-satellites (HAPS). With such air-based and/or space-based base station entities, the classical concept of a cellular network on the ground (terrestrial network) - and the corresponding network (or public land mobile network) selection and/or cell selection -, is no longer feasible, as the transmission on the radio cells provided by the satellites and/or high altitude pseudo satellites do not stop at country borders.

US 2021/242933 A1 discloses a procedure for initial PLMN access by a UE to enable the UE to access a PLMN which is in the same country as the UE.

WO2021075884A1 discloses that a UE may include an independent positioning function such as a Global Positioning System (GPS), and may report the location of the UE independently of NG-RAN transmission. The independently obtained positioning information may be used as auxiliary information of the positioning information obtained from the network.

### SUMMARY

The invention is set out in the independent claims.

An object of the present invention is to provide a technically simple, effective and cost-effective solution for conducting network selection and/or cell selection of a user equipment with regard to a mobile communication network, wherein the mobile communication network comprises or uses or is associated or assigned to a radio access network comprising at least one base station entity being an air-based or a space-based base station entity. A further object of the present invention is to provide a corresponding user equipment, system or mobile communication network, and a corresponding program and computer-readable medium.

The object of the present invention is achieved by a method according to claim 1, a UE according to claim 5, a system according to claim 6, a program according to claim 7 and a computer-readable medium according to claim 8.

It is thereby advantageously possible according to the present invention that - by the user equipment receiving at least one radio signal (but typically a plurality of radio signals), the radio signal (or the plurality of radio signals) being related to or indicative of the location of the user equipment, and by the user equipment inferring a location-related information - the network (or public land mobile network) selection and/or the cell selection is able to be performed in a location-dependent manner.

Especially in case that the location-related information - deduced, derived or detected, by the user equipment, based on (or from) the at least one radio signal - indicates that the at least one air-based or space-based base station entity is able to be used by the user equipment, the user equipment tries to use (or to contact or to camp on) the air-based or space-based base station entity, especially in view of network selection and/or cell selection.

As has already been said, it is known that the coverage of a mobile communication network typically has to conform to regulatory requirements in case two mobile communication networks cover adjacent geographical areas, typically at a border between two countries, i.e. there are maximum allowed signal strength values regarding signal reception that are to be respected at certain locations at or near the border, thus limiting the maximum emission power at the respective base station entities along that border. One of the underlaying reasons for such requirements is that the network selection (or PLMN selection) process as well as the cell selection process is primarily based on signal strength-related information rather than location-related information, i.e. from the perspective of the user equipment, the process is performed in a rather location-agnostic manner. However, with air-based or space-based base station entities that are able to cover comparatively large geographical areas, such border-related considerations - i.e. resulting from the classical concept of purely terrestrial cellular communication networks - are no longer adequate, because such air-based or space-based base station entities would in any case need to cover areas on both sides of a border (or even in three countries in case of two borders approaching each other). While for satellites (or satellite-based base station entities) the main aim is to provide a global voice and broadband coverage, especially HAPS (i.e. base station entities based on high altitude pseudo satellites) could primarily help to provide "fill in" (or added) coverage in order to complement the coverage of a terrestrial network (PLMN) regarding challenging areas, e.g. within a country, wherein such challenges might arise, e.g., from a comparatively low population density or from other difficulties, e.g. in problematic areas of a country. A further difference between satellite-based base station entities and base station entities based on high altitude pseudo satellites might relate to the used network identifier (i.e. typically the PLMN ID): Satellite networks might use a network identifier (information) or PLMN ID (even while not being or providing a 'land network', i.e. a terrestrial mobile network) which is not the one over which country the satellite is currently flying (e.g. such satellites might use an identifier (such as, e.g., a PLMN ID) that is not bound to a specific country, such as, e.g., a so-called "none-geo-MNC" which does either not have a country as part of the PLMNs MCC (Mobile County Code) or is associated to the 'country' "international" in the ITU E212 range MCC=901 [https://www.itu.int/net/ITU-T/inrdb/e212_901.aspx]), whereas HAPS (especially HAPS used to fill in coverage) might use a PLMN ID which is also used in the corresponding terrestrial mobile communication network (as for example 262-01 if the HAPS is flying over Germany to provide extension of the Telekom Deutschland network).

According to the present invention, it is advantageously possible that - by the user equipment receiving at least one radio signal (but typically a plurality of radio signals), the radio signal (or the plurality of radio signals) being related to or indicative of the location of the user equipment, and by the user equipment inferring a location-related information - the network (or public land mobile network) selection and/or the cell selection is able to be performed in a location-dependent manner.

In case that the location-related information - deduced, derived or detected, by the user equipment, based on (or from) the at least one radio signal - indicates (to the user equipment, or from the perspective of the user equipment) that the at least one air-based or space-based base station entity is able to be used by the user equipment, the user equipment selects the air-based or space-based base station entity.

Hence, it is advantageously possible, according to the present invention, that in case the radio cell of a HAPS (i.e. the base station entity of or connected to the HAPS) is providing a cell coverage which spans across a border (e.g. a border between two or more countries or even regions within a country), the user equipment is able to decide based on its own location (i.e. based on the location-related information) if this a an allowable radio cell to connect to (i.e. if in the same country as the HAPS PLMN ID (e.g. in Germany) or not (in case the user equipment sees the Germany HAPS cell in a neighbor country (e.g. France)). Hence, according to the present invention, an enhancement is provided compared to the currently applied and conventionally known principle of PLMN (or network) selection and cell selection on 3GPP radio access technologies, which is purely based on a matching of the selected PLMN ID with the availability of a suitable cell of the selected PLMN and is purely based on radio condition criteria to decide which radio cell corresponds to a "suitable cell".

Similarly for the satellite networks (or radio cells and associated base station entities of or connected to satellites), which typically will provide radio cells which span over country borders: Also with respect to these, the present invention provides a solution to steer the network selection and/or cell selection regarding the satellite cell based on the geographical location of the user equipment, typically (but not necessarily) a user equipment being on the ground (or in a comparably low altitude - compared to the satellite).

According to the present invention, a method for conducting network selection and/or cell selection of a user equipment with regard to a mobile communication network is proposed.

The mobile communication network is associated to a radio access network. Normally, the mobile communication network additionally also comprises or uses or is associated or assigned to a core network. The radio access network comprises at least one air-based or space-based base station entity but typically comprises a plurality of air-based or space-based radio cells, or both air-based or space-based radio cells and terrestrial (further) radio cells and, correspondingly, a plurality of base station entities (typically gNodeBs (in case of using 5G radio access technology) or eNodeBs (in case of using LTE access technology) or base station entities according to other radio access technologies, such as 6G, etc.) providing these radio cells.

It is proposed according to the present invention that the user equipment is configured such as to receive at least one signal, and that the user equipment is furthermore configured to derive or to detect, from such signal, the location-related information. As a result, the user equipment comprises or has such location-related information available, and is thus able to use this location-related information in a network (or public land mobile network) selection process and/or in a cell selection process which is modified with respect to the conventionally known network selection and/or cell selection process, namely such that the network selection process and/or cell selection process is performed (or is able to be performed) in a location-dependent manner, i.e. by taking into consideration the location-related information.

Generally, a first alternative according to the present invention is that the user equipment comprises a global navigation satellite system module, i.e. a receiver (e.g. a GPS module/receiver and/or a GLONASS module/receiver and/or a Galileo module/receiver and/or a Compass module/receiver and/or a BAIDU module/receiver) that is able to receive and process radio frequency signals emitted from satellites of the global navigation satellite system, and to derive a more or less accurate geographical position (of the user equipment) from these radio frequency signals. However, a mere geographical location information is typically not sufficient in order to perform the network selection process and/or cell selection process in a location-related manner: What would be required in addition (to the geographical location information, i.e. the coordinates) is an information of the type whether the user equipment (located at these coordinates) is actually located rather in a country A, or in a country B (especially along a border between countries A and B; and, of course, there might be situations where more than two countries could be involved and/or regions within a country). Hence, in addition it is proposed to provide the user equipment with geographical configuration information by means of which - together with the geographical location information - it is possible for the user equipment to detect or to derive the location-related information (i.e. whether the user equipment is actually located in country A, or in country B).

However, according to the present invention, there is no strict requirement to necessarily provide for a global navigation satellite system functionality within or as part of the user equipment: The present invention also relates to a second alternative wherein the user equipment infers the location-related information based on a mobile country code broadcasted by a terrestrial base station entity. According to an embodiment using multiple base stations (resulting in the user equipment being aware of being located either in country A or in country B) is certainly the relative signal strengths of radio signals received from base station entities on both sides of a border, typically between two countries: If a user equipment receives a plurality of pieces of network identifier information from different terrestrial base station entities, and more or less all these pieces of network identifier information relate to one country (country A) or to mobile networks within that country, it can be rather safely deduced that the user equipment is very likely located in country A. If, however, that user equipment approaches the border (of country A) with country B, the relative signal strength of radio signals received from base station entities located on the other side of the border will increase, and, at, e.g., a specified, configured or predefined ratio (or difference) of the signal strengths of these radio signals, the user equipment infers that it is not any more located in country A but in country B; hence, the user equipment infers the location-related information based on the respective radio signals.

Another example of such a source of information (resulting in the user equipment being aware of being located either in country A or in country B) could alternatively also correspond to the user equipment receiving or being provided the location-related information directly (or a locally applicable manner to infer it), e.g. from a further (terrestrial) base station entity (being located at or near the border between countries A and B): Such a base station entity may indicate or provide an information of the kind "in case the signal strength of one of 'my' broadcast radio signals is below a certain indicated value (and you do not receive radio signals from other base station entities of the own mobile communication network), you should consider to be located in country B rather than in country A".

According to the present invention, after the location-related information has been detected or derived from the received radio signals, the user equipment proceeds, in a second step, to use the air-based or space-based base station entity in view of network selection and/or cell selection, in dependency of the location-related information detected or derived by the user equipment.

According to the present invention and in case that the location-related information detected or derived by the user equipment indicates that the air-based or space-based base station entity shall not be used by the user equipment, the user equipment conducts network selection and/or cell selection using one or a plurality of further base station entities of the mobile communication network and/or of a further mobile communication network, the further base station entities corresponding to terrestrial base station entities.

It is thereby advantageously possible that the user equipment is able to find a suitable or at least an acceptable radio cell, even in case the user equipment, based on the determined or detected location-related information, is not allowed to access the air-based or space-based base station entity in question.

According to the first alternative of present invention the at least one radio signal corresponds to a signal received, by the user equipment, from a global navigation satellite system, wherein the user equipment comprises a global navigation satellite system receiver module, and wherein the user equipment detects or calculates, by means of the global navigation satellite system receiver module, its geographical location from the at least one radio signal.

It is thereby advantageously possible that the user equipment detects or calculates its geographical location.

According to the present invention, prior to or at least partly during the first step, the user equipment receives at least one set of geographical configuration information, wherein the user equipment infers the location-related information based on its geographical location and the geographical configuration information, wherein the at least one set of geographical configuration information corresponds to country polygons and/or region polygons and/or parts thereof.

By means of the geographical configuration information (in addition to its geographical location), the user equipment is able to detect or derive the location-related information from the radio signal of the global navigation satellite system.

Furthermore, it is advantageously possible and preferred according to the present invention that the set or sets of geographical configuration information correspond(s) to at least one piece of reception condition information regarding at least one radio signal or radio signals received, by the user equipment, from at least two of the further base station entities, wherein the user equipment infers the location-related information based on the at least one radio signal or radio signals of the at least two of the further base station entities,
wherein especially the at least one piece of reception condition information regarding the at least two further base station entities correspond to signal strength offset values to be applied for inferring the location-related information.

Thereby, it is advantageously possible that the user equipment infers the location-related information merely based on determining and/or comparing the signal strengths of readily available radio signals.

According to a further preferred embodiment of the present invention, the set or sets of geographical configuration information is/are received by the user equipment and/or stored in the user equipment according to at least one out of the following mechanisms:
-- the set or sets of geographical configuration information is/are preconfigured in the software of the user equipment, either at production or by means of a software update, especially over the air,
-- the set or sets of geographical configuration information is/are received, by the user equipment, via a broadcast channel of the at least one base station entity and/or of one or a plurality of the further base station entities of the mobile communication network, especially via the broadcast control channel and/or using one or a plurality of system information blocks, especially a system information block dedicated to transmit geographical configuration information.

Thereby, it is advantageously possible that the user equipment is able to provided with the set or sets of geographical configuration information in a comparatively easy and efficient manner.

According to a further preferred embodiment of the present invention, wherein the set or sets of geographical configuration information transmitted to the user equipment by the at least one base station entity and/or by at least one further base station entity correspond to a limited geographical area in the vicinity of the at least one base station entity and/or in the vicinity of the user equipment,
wherein especially the set or sets of geographical configuration information indicate available base station entities and/or available mobile communication networks in case that the inferred location of the user equipment matches one or a plurality of the set or sets of geographical configuration information.

It is thereby advantageously possible to effectively steer the network selection and/or cell selection procedures applied.

Furthermore, the present invention relates to a user equipment according to claim 5 and to a system according to claim 6.

Additionally, the present invention relates to a program according to claim 7 and a computer-readable medium according to claim 8.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

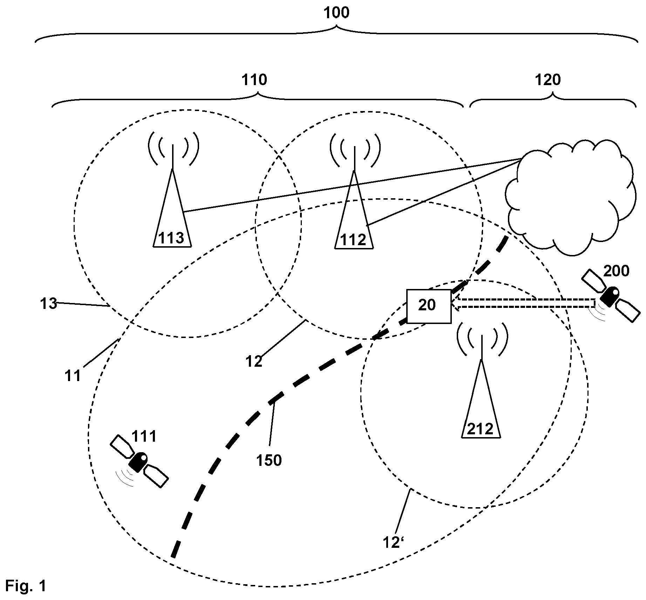

Figure 1 schematically illustrates the situation of a mobile communication network and an associated user equipment at or near a border, e.g. between two countries.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a mobile communication network 100 is schematically shown in a situation of an associated user equipment 20 being at or near a border 150, e.g. between two countries or also between two different regions within a country. In the example, the mobile communication network 100 comprises an access network 110 and a core network 120. The mobile communication network 100 is preferably a cellular telecommunications network comprising typically a plurality of network cells (or radio cells). According to the present invention, the mobile communication network 100 is associated to the radio access network 110, and the radio access network 110 (of the mobile communication network 100) comprises at least one base station entity 111 being an air-based or a space-based base station entity 111 - schematically shown, in Figure 1, by means of a schematically illustrated satellite 111 as well as a dashed line and reference sign 11 indicating the radio coverage area of the air-based or space-based base station entity 111. Preferably, the radio access network 110 of the mobile communication network 100 additionally comprises further base station entities that are especially terrestrial base station entities: Figure 1 exemplarily shows two further base station entities 112, 113 (as well as their respective radio coverage areas, indicated by means of reference signs 12 and 13) as part of the radio access network 110 of the mobile communication network 100; additionally, another further base station entity is indicated by means of reference sign 212 (and its radio coverage area 12') - corresponding likewise especially to a terrestrial base station entity but being part of a further mobile communication network (not specifically represented or indicated in Figure 1).

According to the present invention, a method for conducting network selection and/or cell selection of the user equipment 20 with regard to the mobile communication network 100 is proposed, wherein the network selection and/or cell selection of the user equipment 20 is conducted in a location-dependent manner, depending on the location of the user equipment 20.

According to the present invention, the user equipment 20 is configured such as to receive at least one (radio) signal, and furthermore it is configured to derive or to detect, from such (radio) signal, location-related information. The location-related information corresponds, e.g., to the information - with respect to the exemplarily illustrated example or with respect to the situation shown in Figure 1 - on which side of the border 150 the user equipment 20 is considered to be located; for example, the mobile communication network 100 covers a first country (e.g. country A), and the further mobile communication network (of which the further base station entity 212 is a part of or assigned or associated to) covers a second country (e.g. country B). As a result, the user equipment comprises or has such location-related information available, and is thus able to use this location-related information in a network (or public land mobile network) selection process and/or in a cell selection process which is modified with respect to the conventionally known network selection and/or cell selection process, namely such that the network selection process and/or cell selection process is performed (or is able to be performed) in a location-dependent manner, i.e. by taking into consideration the location-related information. This is performed, according to the present invention, by means of a first step, during which the user equipment 20 receives at least one radio signal being related to or indicative of the location of the user equipment 20, and detects or derives the location-related information from that (at least one) radio signal, and by means of a second step, during which the air-based or space-based base station entity 111 is used, by the user equipment 20 and in view of network selection and/or cell selection, in dependency of the location-related information detected or derived by the user equipment 20. Of course, the air-based or space-based base station entity 111 is only attached to in case such is possible or allowed having regard to the user equipment's 20 location (i.e. the user equipment's 20 internal representation of its location -regarding its location either on the one or the other side of the border 150 in the most basic situation). Of course, in case that the location-related information detected or derived by the user equipment 20 indicates that the air-based or space-based base station entity 111 shall not be used by the user equipment 20 (due to its probable location being on the wrong side of the border 150), the user equipment 20 conducts the network selection and/or cell selection using a further base station entity, such as the further base station entities 112, 113 and/or 212 (of the mobile communication network 100 and/or of a further mobile communication network).

In Figure 1, additionally a global navigation satellite system 200 is schematically shown. A dashed arrow (or, rather, an arrow drawn using a dashed line) being directed towards the user equipment 20, is shown representing radio signals, received by the user equipment 20, from the global navigation satellite system 200. Of course, the global navigation satellite system 200 typically comprises a plurality of satellites or other elements transmitting and/or broadcasting radio signals that are able to be used - at or by suitable receiver modules or components - to calculate the geographical position where the respective receiver module is currently located; however, despite this and for the sake of simplicity, only one representation of the global navigation satellite system 200 and only one arrow towards the user equipment 20 is represented in Figure 1.

According to a first alternative of the present invention, the at least one radio signal (received by the user equipment 20) corresponds to a signal received from the global navigation satellite system 200 (or from one or, rather, a plurality of its components or elements). In this case the user equipment 20 comprises a corresponding global navigation satellite system receiver module (not specifically shown in Figure 1) such that the user equipment 20 itself detects or calculates, by means of the global navigation satellite system receiver module, its geographical location from the at least one received radio signal.

However, typically even a precise information regarding its geographical location (especially being derived from a radio signal (or, rather, a plurality of (radio) signals) global navigation satellite system), does not necessarily provide an answer to the question on which side of the border 150 the user equipment is located. Therefore the first alternative of the present invention provides for at least one set of geographical configuration information being received by the user equipment 20, preferably prior to or at least partly during the first step (but in any case prior to the user equipment 20 detecting or deriving the location-related information). By means of the geographical configuration information (or the at least one set of geographical configuration information), and, of course, its geographical location, the user equipment 20 infers the location-related information.

Different global navigation satellite systems are able to be used according to the present invention, e.g. the GPS system, the GLONASS system, the Galileo system, the Compass system and/or the BAIDU system.

Hence, by means of both the geographical location, and the geographical configuration information, the user equipment 20 infers the location-related information, and, thus, know whether it is currently located rather in the first country (or country A), or in the second country (country B), especially along the border 150 between both.

Preferably according to the present invention, the set or sets of geographical configuration information is or are received by the user equipment 20 and/or stored in the user equipment 20 according to at least one out of the following mechanisms:
-- the set or sets of geographical configuration information is/are preconfigured in the software of the user equipment 20, either at production or by means of a software update, especially over the air,
-- the set or sets of geographical configuration informationis/are received, by the user equipment 20, via a broadcast channel of the at least one base station entity 111 and/or of one or a plurality of the further base station entities 112, 113, 212 of the mobile communication network 100, especially via the broadcast control channel and/or using one or a plurality of system information blocks, especially a system information block dedicated to transmit geographical configuration information.

Furthermore especially, the set or sets of geographical configuration information transmitted to the user equipment 20 by the at least one base station entity 111 and/or by at least one further base station entity 112, 113, 212 correspond to a limited geographical area in the vicinity of the at least one base station entity 111 or the at least one further base station entity 112, 113, 212, respectively, and/or in the vicinity of the user equipment 20, wherein especially the set or sets of geographical configuration information indicate available base station entities and/or available mobile communication networks in case that the inferred location of the user equipment 20 matches one or a plurality of the set or sets of geographical configuration information.

As already said, according to the present invention, the present invention is not limited to situation where the user equipment 20 is equipped with a global navigation satellite system functionality. The present invention also relates to a second alternative in which the user equipment infers the location-related information based on a mobile country code broadcasted by the terrestrial base station entity.

One such embodiment, situation or example relates to inferring on which side of the border 150 the user equipment 20 is located from the relative signal strengths of radio signals received from base station entities on both sides of the border 150, typically between two countries. The user equipment 20 receives a plurality of pieces of network identifier information from different terrestrial base station entities (such as base station entities 112 and 212 in Figure 1), and the side of the border 150 is inferred from the relative signal strengths of radio signals received from these base station entities (located on both sides of the border) in case certain specified, configured or predefined situations (e.g. a certain ratio (or difference) of the signal strengths of these radio signals) is measured by the user equipment 20. In this case, the set or sets of geographical configuration information especially corresponds or correspond to at least one piece of reception condition information regarding at least one radio signal or radio signals received, by the user equipment 20, from at least two of the further base station entities 112, 113, 212 (especially base station entities 112 and 212), wherein the user equipment 20 infers the location-related information based on the at least one radio signal or radio signals of the at least two of the further base station entities 112, 113, 212, and wherein especially the at least one piece of reception condition information regarding the at least two further base station entities 112, 113, 212 correspond to signal strength offset values to be applied for inferring the location-related information.

Generally according to the present invention, it is proposed to introduce related signaling to allow the control of the network (or public land mobile network) selection process and/or the cell selection process depending on the geographical location of a user equipment 20 on the ground for HAPS and satellite networks (i.e. mobile communication networks comprising at least one air-based or space-based base station entity). As illustrated in the Figure 1, HAPS-based or satellite-based base station entities typically provide radio cell spanning potentially over the border 150 between two countries (or even the borders among more than two countries). The aim is to only allow a user equipment 20 located, e.g., in Germany to select and eventually connect to the HAPS-based and/or satellite-based radio cell 11 (which in this case might broadcast a PLMN ID information "262-01" for German Telekom Deutschland). It can be clearly seen that the cells coverage area does not stop at the country border to, e.g., Austria in this example. A further user equipment that is geographically located in Austria shall, e.g., not be allowed to select and access that HAPS-based or satellite-based radio cell 11. The solution according to the present invention aims to provide additional information to the user equipment 20 which makes the cell selection process location dependent in contrast to only base it on the PLMN ID and the radio conditions (as is conventionally known and defined in the current standards). According to the present invention, there are two alternative solutions to achieve this goal:

The user equipment 20 checks the availability of terrestrial network cells to obtain knowledge if the user equipment 20 is inside a specific coverage, e.g. if the user equipment 20 sees a "262-01" radio cell (or any "262...", i.e. "262+any mobile network code MNC" i.e. Germany-based mobile communication network) radio cell, it knows that it is located in Germany (except in case the user equipment is located at or near the border: It might be located in the neighbor country and still see 262-MNC radio cells of German operators; however, in such a situation (of the user equipment being the neighbor country) probably the non-262-MNC radio cells will probably be stronger than the 262-MNC ones) and selection as well as access to the provided HAPS-based or satellite-based "262-01" radio cell is allowed. With regard to this first alternative, no global navigation satellite system receiver is needed at the user equipment 20 to obtain its current geolocation.

According to a second alternative, the user equipment 20 is equipped with a global navigation satellite system receiver to obtain its geolocation using any global navigation satellite system system (like GPS, Galileo, GLONASS etc.), which is the case of even the cheapest smartphones today. Under this assumption, e.g. the geo-polygon of a country needs to be made available to the user equipment 20 in order allowing the user equipment 20 to evaluate if its own location is inside or outside the country polygons in question; country polygon information is today widely available and can be obtained in standardized data formats such as .json, XML or the like; a full set of country polygons which an accurate enough resolution of all countries of the world is not more than 20 Mbyte of size.

Hence, it is advantageously possible, according to the present invention, to change the network (or public land mobile network) selection process and/or the cell selection process of current 3GPP systems to also use the geographical location of the user equipment 20 as additional suitability criterion. In the following, the steps of the enhanced network (public land mobile network) selection procedure according to the present invention are shown for the case that country polygons are used as geographical configuration information:
1) the user equipment is provided with country polygons;
2) the user equipment obtains its geo-location;
3) check if geo-location is in country of PLMN of HAPS-/satellite-based radio cell; i.e. detect or derive the location-related information;
4) PLMN selection (as in 3GPP TS 22.011, 3GPP TS 23.122)
5) if check in 3) is positive (i.e. the user equipment is, e.g., inside the country or on the allowed list):
   → perform cell selection (of HAPS-based or satellite-based cell) if check in 3) is negative (i.e. the user equipment is, e.g., outside the country or not in allowed list):
   → continue PLMN selection of a terrestrial radio cell

According to the present invention, there are several manners to provision the user equipment 20 with the geographical (country-specific) configuration information (especially a country polygon information), especially:
-- preconfigure country polygons in the user equipment's software (at production or firmware update); full global country polygons typically to ensure global support, can also be based on country specific software version of the user equipment with over the air update possibility if the user equipment is roaming to other parts of the world;.
-- preconfigure country polygons using the broadcast channel (e.g., BCCH with system information blocks, SIBs) of the terrestrial cellular mobile network (dedicated SIB), perhaps with optimized provisioning (e.g. for the area the network is operating) to minimize the amount of data to transmit the country polygons (e.g. only at the border providing the optimized polygon for that area, or alternatively the entire country border polygon and the one of the neighboring country);
-- preconfigure country polygons using the broadcast channel (BCCH with SIBs) of the HAPS-based radio cell or the satellite-based radio cell (dedicated SIB), perhaps with optimized provisioning (e.g. for the area the network is operating) to minimize the amount of data to transmit the country polygons (e.g. only at the border providing the optimized polygon for that area.

This principle can also be employed in case of a country specific allowance of satellite connectivity: E.g. the terrestrial radio cell broadcasts information of to which satellite network the user equipment might be allowed to connect to in case of an available mobile satellite network and/or HAPS network.

E.g., a pseudo RRC signaling in ASN.1 might be as follows:
SIBX
: Carries configuration for allowed alternative networks (HAPS, Sat) to connect to

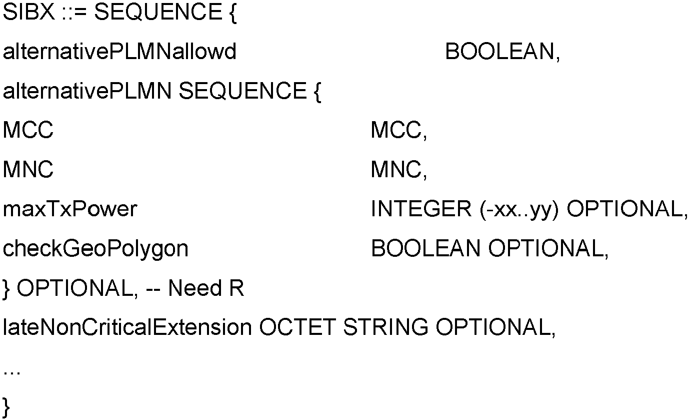

## Claims

1. Method for conducting network selection and/or cell selection of a user equipment (20) with regard to a mobile communication network (100), wherein the mobile communication network (100) is associated to a radio access network (110) comprising at least one base station entity (111) being an air-based or a space-based base station entity (111), wherein the air-based or a space-based base station entity (111) broadcasts a public land mobile network identifier,
wherein the network selection and/or cell selection of the user equipment (20) is conducted in a location-dependent manner, depending on the location of the user equipment (20),
wherein in order to conduct the network selection and/or the cell selection in the location-dependent manner, the method comprises the following steps:
-- in a first step, the user equipment (20) receives at least one radio signal being related to or indicative of the location of the user equipment (20), wherein the at least one radio signal corresponds to
-- a radio signal received, by the user equipment (20), from a terrestrial base station entity (112, 113, 212) of the mobile communication network (100) and/or of a further mobile communication network, wherein the user equipment (20) infers the location-related information based on a mobile country code broadcasted by the terrestrial base station entity (112, 113, 212), or
-- radio signals received, by the user equipment (20), from a global navigation satellite system (200), wherein the user equipment (20) comprises a global navigation satellite system receiver module, and wherein the user equipment (20) detects or calculates, by means of the global navigation satellite system receiver module, its geographical location from the radio signals, wherein, prior to or at least partly during the first step, the user equipment (20) receives at least one set of geographical configuration information, wherein the user equipment (20) infers the location-related information based on its geographical location and the geographical configuration information, wherein the at least one set of geographical configuration information corresponds to country polygons and/or region polygons and/or parts thereof,
-- in a second step, the air-based or space-based base station entity (111) is used, by the user equipment (20) and in view of network selection and/or cell selection, in dependency of the location-related information inferred by the user equipment (20), wherein the user equipment (20) decides based on the location-related information whether it is located in the same country as indicated by the public land mobile network identifier broadcasted by the air-based or a space-based base station entity (111), wherein, in case that the user equipment (20) is not located in the same country as indicated by the public land mobile network identifier, the user equipment (20) conducts network selection and/or cell selection using one or a plurality of terrestrial base station entities (112, 113, 212) of the mobile communication network (100) and/or of a further mobile communication network.

2. Method according to claim 1, wherein the set or sets of geographical configuration information correspond(s) to at least one piece of reception condition information regarding at least one radio signal or radio signals received, by the user equipment (20), from at least two of the further base station entities (112, 113, 212), wherein the user equipment (20) infers the location-related information based on the at least one radio signal or radio signals of the at least two of the further base station entities (112, 113, 212), wherein especially the at least one piece of reception condition information regarding the at least two further base station entities (112, 113, 212) correspond to signal strength offset values to be applied for inferring the location-related information.

3. Method according to claim 1 or 2, wherein the set or sets of geographical configuration information is/are received by the user equipment (20) and/or stored in the user equipment (20) according to at least one out of the following mechanisms:
-- the set or sets of geographical configuration information, especially country polygons and/or region polygons and/or parts thereof, is/are preconfigured in the software of the user equipment (20), either at production or by means of a software update, especially over the air,
-- the set or sets of geographical configuration information, especially country polygons and/or region polygons and/or parts thereof, is/are received, by the user equipment (20), via a broadcast channel of the at least one base station entity (111) and/or of one or a plurality of the further base station entities (112, 113, 212) of the mobile communication network (100), especially via the broadcast control channel and/or using one or a plurality of system information blocks, especially a system information block dedicated to transmit geographical configuration information.

4. Method according to one of the preceding claims, wherein the set or sets of geographical configuration information transmitted to the user equipment (20) by the at least one base station entity (111) and/or by at least one further base station entity (112, 113, 212) correspond to a limited geographical area in the vicinity of the at least one base station entity (111) or the at least one further base station entity (112, 113, 212), respectively, and/or in the vicinity of the user equipment (20),
wherein especially the set or sets of geographical configuration information indicate available base station entities and/or available mobile communication networks in case that the inferred location of the user equipment (20) matches one or a plurality of the set or sets of geographical configuration information.

5. User equipment (20) for conducting network selection and/or cell selection with regard to a mobile communication network (100), the mobile communication network (100) being associated to a radio access network (110) comprising at least one base station entity (111) being an air-based or a space-based base station entity (111),
wherein the user equipment (20) is configured to realize network selection and/or cell selection in a location-dependent manner, depending on the location of the user equipment (20), wherein the user equipment (20) is configured to receive a public land mobile network identifier broadcasted by the air-based or a space-based base station entity (111),
wherein in order to conduct the network selection and/or the cell selection in the location-dependent manner, the user equipment (20) is configured:
-- to receive at least one radio signal being related to or indicative of the location of the user equipment (20), wherein the at least one radio signal corresponds to
-- a radio signal received, by the user equipment (20), from a terrestrial base station entity (112, 113, 212) of the mobile communication network (100) and/or of a further mobile communication network, wherein the user equipment (20) infers the location-related information based on a mobile country code broadcasted by the terrestrial base station entity (112, 113, 212), or
-- radio signals received, by the user equipment (20), from a global navigation satellite system (200), wherein the user equipment (20) comprises a global navigation satellite system receiver module, and wherein the user equipment (20) detects or calculates, by means of the global navigation satellite system receiver module, its geographical location from the radio signal, wherein, prior to or at least partly during receiving at least one radio signal being related to or indicative of the location of the user equipment (20), the user equipment (20) receives at least one set of geographical configuration information, wherein the user equipment (20) infers the location-related information based on its geographical location and the geographical configuration information, wherein the at least one set of geographical configuration information corresponds to country polygons and/or region polygons and/or parts thereof,
-- to use the air-based or space-based base station entity (111) in view of network selection and/or cell selection in dependency of the location-related information inferred by the user equipment (20), wherein the user equipment (20) is configured to decide based on the location-related information whether it is located in the same country as indicated by the public land mobile network identifier broadcasted by the air-based or a space-based base station entity (111), wherein, in case that the user equipment (20) is not located in the same country as indicated by the public land mobile network identifier, the user equipment (20) is further configured to conduct network selection and/or cell selection using one or a plurality of terrestrial base station entities (112, 113, 212) of the mobile communication network (100) and/or of a further mobile communication network.

6. System comprising a user equipment (20), a mobile communication network (100), and a global navigation satellite system (200), wherein the mobile communication network (100) is associated to a radio access network (110) comprising at least one base station entity (111) being an air-based or a space-based base station entity (111), wherein the air-based or a space-based base station entity (111) broadcasts a public land mobile network identifier,
wherein the system is configured to allow network selection and/or cell selection of the user equipment (20) to be conducted in a location-dependent manner, depending on the location of the user equipment (20),
wherein in order to conduct the network selection and/or the cell selection in the location-dependent manner, the system is configured such that:
-- the system transmits, to the user equipment (20), at least one radio signal being related to or indicative of the location of the user equipment (20), wherein the at least one radio signal corresponds to
-- a radio signal received, by the user equipment (20), from a terrestrial base station entity (112, 113, 212) of the mobile communication network (100) and/or of a further mobile communication network, wherein the user equipment (20) infers the location-related information based on a mobile country code broadcasted by the terrestrial base station entity (112, 113, 212), or
-- radio signals received, by the user equipment (20), from a global navigation satellite system (200), wherein the user equipment (20) comprises a global navigation satellite system receiver module, and wherein the user equipment (20) detects or calculates, by means of the global navigation satellite system receiver module, its geographical location from the radio signals, wherein, prior to or at least partly during the system transmitting, to the user equipment (20), at least one radio signal being related to or indicative of the location of the user equipment (20), the user equipment (20) receives at least one set of geographical configuration information, wherein the user equipment (20) infers the location-related information based on its geographical location and the geographical configuration information, wherein the at least one set of geographical configuration information corresponds to country polygons and/or region polygons and/or parts thereof,
-- the air-based or space-based base station entity (111) is used, by the user equipment (20) and in view of network selection and/or cell selection, in dependency of the location-related information inferred by the user equipment (20), wherein the user equipment (20) is configured to decide based on the location-related information whether it is located in the same country as indicated by the public land mobile network identifier broadcasted by the air-based or a space-based base station entity (111), wherein, in case that the user equipment (20) is not located in the same country as indicated by the public land mobile network identifier, the user equipment (20) conducts network selection and/or cell selection using one or a plurality of terrestrial base station entities (112, 113, 212) of the mobile communication network (100) and/or of a further mobile communication network.

7. Program comprising a computer readable program code, which, when executed on a user equipment (20) causes the user equipment (20) to perform a method according one of claims 1 to 4.

8. Computer-readable medium comprising instructions which when executed on a user equipment (20) causes the user equipment (20) to perform a method according one of claims 1 to 4.

## Patentansprüche

1. Verfahren zum Durchführen einer Netzauswahl und/oder Zellenauswahl einer Benutzereinrichtung (20) in Bezug auf ein Mobilkommunikationsnetz (100), wobei das Mobilkommunikationsnetz (100) einem Funkzugangsnetz (110) zugeordnet ist, das mindestens eine Basisstationseinheit (111) umfasst, die eine luft- oder raumgestützte Basisstationseinheit (111) ist, wobei die luft- oder raumgestützte Basisstationseinheit (111) eine Kennung für ein öffentliches mobiles Landnetz sendet
wobei die Netzauswahl und/oder Zellenauswahl der Benutzereinrichtung (20) in einer ortsabhängigen Weise durchgeführt wird, abhängig von dem Standort der Benutzereinrichtung (20),
wobei, um die Netzauswahl und/oder die Zellenauswahl in der ortsabhängigen Weise durchzuführen, das Verfahren die folgenden Schritte umfasst:
-- in einem ersten Schritt empfängt die Benutzereinrichtung (20) mindestens ein Funksignal, das mit dem Standort der Benutzereinrichtung (20) in Beziehung steht oder diesen angibt, wobei das mindestens eine Funksignal entspricht
-- einem Funksignal, das von der Benutzereinrichtung (20) von einer terrestrischen Basisstationseinheit (112, 113, 212) des Mobilkommunikationsnetzes (100) und/oder eines weiteren Mobilkommunikationsnetzes empfangen wird, wobei die Benutzereinrichtung (20) die standortbezogenen Informationen auf der Grundlage eines von der terrestrischen Basisstationseinheit (112, 113, 212) ausgestrahlten mobilen Ländercodes ableitet, oder
--Funksignale, die von der Benutzereinrichtung (20) von einem globalen Navigationssatellitensystem (200) empfangen werden, wobei die Benutzereinrichtung (20) ein globales Navigationssatellitensystem-Empfängermodul umfasst, und wobei die Benutzereinrichtung (20) mittels des globalen Navigationssatellitensystem-Empfängermoduls ihren geografischen Standort aus den Funksignalen erkennt oder berechnet, wobei vor oder zumindest teilweise während des ersten Schritts, die Benutzereinrichtung (20) mindestens einen Satz von geographischen Konfigurationsinformationen empfängt, wobei die Benutzereinrichtung (20) die ortsbezogenen Informationen auf der Grundlage seines geographischen Standorts und der geographischen Konfigurationsinformationen herleitet, wobei der mindestens eine Satz von geographischen Konfigurationsinformationen Länderpolygonen und/oder Regionenpolygonen und/oder Teilen davon entspricht,
-- in einem zweiten Schritt wird die luft- oder raumgestützte Basisstationseinheit (111) von der Benutzereinrichtung (20) und im Hinblick auf die Netzauswahl und/oder Zellenauswahl in Abhängigkeit von den von der Benutzereinrichtung (20) abgeleiteten ortsbezogenen Informationen verwendet, wobei die Benutzereinrichtung (20) auf der Grundlage der ortsbezogenen Informationen entscheidet, ob sie sich in demselben Land befindet, das durch die Kennung des öffentlichen mobilen Landnetzes angegeben wird, die von der luft- oder raumgestützten Basisstationseinheit (111) ausgestrahlt wird, wobei für den Fall, dass sich die Benutzereinrichtung (20) nicht in demselben Land befindet, wie es durch die Kennung des öffentlichen mobilen Landnetzes angegeben ist, die Benutzereinrichtung (20) eine Netzauswahl und/oder Zellenauswahl unter Verwendung einer oder mehrerer terrestrischer Basisstationseinheiten (112, 113, 212) des Mobilkommunikationsnetzes (100) und/oder eines weiteren Mobilkommunikationsnetzes durchführt.

2. Verfahren nach Anspruch 1, wobei der Satz oder die Sätze von geographischen Konfigurationsinformationen mindestens einer Empfangsbedingungsinformation bezüglich mindestens eines Funksignals oder Funksignalen entsprechen, die von der Benutzereinrichtung (20) von mindestens zwei der weiteren Basisstationseinheiten (112, 113, 212) empfangen werden, wobei die Benutzereinrichtung (20) die ortsbezogenen Informationen auf der Grundlage des mindestens einen Funksignals oder der Funksignale der mindestens zwei weiteren Basisstationseinheiten (112, 113, 212) ableitet,
wobei insbesondere die mindestens eine Empfangsbedingungsinformation bezüglich der mindestens zwei weiteren Basisstationseinheiten (112, 113, 212) Signalstärke-Offset-Werten entspricht, die zum Ableiten der ortsbezogenen Information anzuwenden sind.

3. Verfahren nach Anspruch 1 oder 2, wobei der Satz oder die Sätze von geographischen Konfigurationsinformationen von der Benutzereinrichtung (20) empfangen und/oder in der Benutzereinrichtung (20) gemäß mindestens einem der folgenden Mechanismen gespeichert wird/werden:
-- der Satz oder die Sätze von geographischen Konfigurationsinformationen, insbesondere Länderpolygone und/oder Regionenpolygone und/oder Teile davon, in der Software der Benutzereinrichtung (20) vorkonfiguriert ist/sind, entweder bei der Herstellung oder mittels eines Software-Updates, insbesondere über die Luft ,
-- der oder die Sätze von geographischen Konfigurationsinformationen, insbesondere Länderpolygone und/oder Regionenpolygone und/oder Teile davon, von der Benutzereinrichtung (20) über einen Rundfunkkanal der mindestens einen Basisstationseinheit (111) und/oder einer oder mehrerer weiterer Basisstationseinheiten (112, 113, 212) des Mobilkommunikationsnetzes (100), insbesondere , über den Rundfunksteuerkanal und/oder unter Verwendung eines oder mehrerer Systeminformationsblöcke, insbesondere eines zur Übertragung von geographischen Konfigurationsinformationen bestimmten Systeminformationsblocks, empfangen werden.

4. Verfahren nach einem der vorhergehenden Ansprüche, , wobei der Satz oder die Sätze von geographischen Konfigurationsinformationen, die von der mindestens einen Basisstationsinstanz (111) und/oder von mindestens einer weiteren Basisstationsinstanz (112, 113, 212) an die Benutzereinrichtung (20) übermittelt werden, einem begrenzten geographischen Gebiet in der Nähe der mindestens einen Basisstationsinstanz (111) bzw. der mindestens einen weiteren Basisstationsinstanz (112, 113, 212) und/oder in der Nähe der Benutzereinrichtung (20) entsprechen,
wobei insbesondere der Satz oder die Sätze von geographischen Konfigurationsinformationen verfügbare Basisstationseinheiten und/oder verfügbare Mobilkommunikationsnetze anzeigen, falls der abgeleitete Standort der Benutzereinrichtung (20) mit einem oder mehreren der Sätze oder Sätze von geographischen Konfigurationsinformationen übereinstimmt.

5. Benutzereinrichtung (20) zum Durchführen einer Netzauswahl und/oder Zellenauswahl in Bezug auf ein Mobilkommunikationsnetz (100), wobei das Mobilkommunikationsnetz (100) mit einem Funkzugangsnetz (110) verbunden ist, das mindestens eine Basisstationseinheit (111) umfasst, die eine luft- oder weltraumgestützte Basisstationseinheit (111) ist,
wobei die Benutzereinrichtung (20) so konfiguriert ist, dass es eine Netzauswahl und/oder eine Zellenauswahl in einer ortsabhängigen Weise in Abhängigkeit von dem Standort der Benutzereinrichtung (20) realisiert, wobei die Benutzereinrichtung (20) so konfiguriert ist, dass es eine Kennung eines öffentlichen mobilen Landnetzes empfängt, die von der luft- oder raumgestützten Basisstationseinheit (111) ausgestrahlt wird,
wobei die Benutzereinrichtung (20) so konfiguriert ist, dass es die Netzauswahl und/oder die Zellenauswahl in der ortsabhängigen Weise durchführt:
-- um mindestens ein Funksignal zu empfangen, das sich auf den Standort der Benutzereinrichtung (20) bezieht oder diesen anzeigt, wobei das mindestens eine Funksignal entspricht
-- einem Funksignal, das von der Benutzereinrichtung (20) von einer terrestrischen Basisstationseinheit (112, 113, 212) des Mobilkommunikationsnetzes (100) und/oder eines weiteren Mobilkommunikationsnetzes empfangen wird, wobei die Benutzereinrichtung (20) die standortbezogenen Informationen auf der Grundlage eines von der terrestrischen Basisstationseinheit (112, 113, 212) ausgestrahlten mobilen Ländercodes ableitet, oder
-- Funksignale, die von der Benutzereinrichtung (20) von einem globalen Navigationssatellitensystem (200) empfangen werden, wobei die Benutzereinrichtung (20) ein globales Navigationssatellitensystem-Empfängermodul umfasst, und wobei die Benutzereinrichtung (20) mittels des globalen Navigationssatellitensystem-Empfängermoduls ihren geografischen Standort aus dem Funksignal erfasst oder berechnet, wobei vor oder zumindest teilweise während des Empfangs mindestens eines Funksignals, das sich auf den Standort der Benutzereinrichtung (20) bezieht oder diesen anzeigt die Benutzereinrichtung (20) mindestens einen Satz von geographischen Konfigurationsinformationen empfängt, wobei die Benutzereinrichtung (20) die ortsbezogenen Informationen auf der Grundlage seines geographischen Standorts und der geographischen Konfigurationsinformationen ableitet, wobei der mindestens eine Satz von geographischen Konfigurationsinformationen Länderpolygonen und/oder Regionenpolygonen und/oder Teilen davon entspricht
-- die luft- oder raumgestützte Basisstationseinheit (111) im Hinblick auf die Netzauswahl und/oder die Zellenauswahl in Abhängigkeit von den von der Benutzereinrichtung (20) abgeleiteten standortbezogenen Informationen zu verwenden, wobei die Benutzereinrichtung (20) so konfiguriert ist, dass sie auf der Grundlage der standortbezogenen Informationen entscheidet, ob sie sich in demselben Land befindet, das durch die von der luft- oder raumgestützten Basisstationseinheit (111) ausgestrahlte Kennung des öffentlichen mobilen Landnetzes angegeben wird, wobei für den Fall, dass sich die Benutzereinrichtung (20) nicht in demselben Land befindet, wie es durch die Kennung des öffentlichen mobilen Landnetzes angegeben ist, die Benutzereinrichtung (20) ferner so konfiguriert ist, dass es eine Netzauswahl und/oder Zellenauswahl unter Verwendung einer oder mehrerer terrestrischer Basisstationseinheiten (112, 113, 212) des Mobilkommunikationsnetzes (100) und/oder eines weiteren Mobilkommunikationsnetzes durchführt.

6. System, das eine Benutzereinrichtung (20), ein Mobilkommunikationsnetz (100) und ein globales Navigationssatellitensystem (200) umfasst, wobei das Mobilkommunikationsnetz (100) mit einem Funkzugangsnetz (110) verbunden ist, das mindestens eine Basisstationseinheit (111) umfasst, die eine luft- oder weltraumgestützte Basisstationseinheit (111) ist, wobei die luft- oder weltraumgestützte Basisstationseinheit (111) eine Kennung für ein öffentliches mobiles Landnetz sendet
wobei das System so konfiguriert ist, dass es eine Netzauswahl und/oder Zellenauswahl der Benutzereinrichtung (20) in einer ortsabhängigen Weise in Abhängigkeit vom Standort der Benutzereinrichtung (20) ermöglicht,
wobei , um die Netzauswahl und/oder die Zellenauswahl in der standortabhängigen Weise durchzuführen, das System so konfiguriert ist, dass:
-- das System an die Benutzereinrichtung (20) mindestens ein Funksignal sendet, das sich auf den Standort der Benutzereinrichtung (20) bezieht oder diesen anzeigt, wobei das mindestens eine Funksignal entspricht
-- einem Funksignal, das von der Benutzereinrichtung (20) von einer terrestrischen Basisstationseinheit (112, 113, 212) des Mobilkommunikationsnetzes (100) und/oder eines weiteren Mobilkommunikationsnetzes empfangen wird, wobei die Benutzereinrichtung (20) die standortbezogene Information auf der Grundlage eines von der terrestrischen Basisstationseinheit (112, 113, 212) ausgestrahlten mobilen Ländercodes ableitet, oder
-- Funksignale, die von der Benutzereinrichtung (20) von einem globalen Navigationssatellitensystem (200) empfangen werden, wobei die Benutzereinrichtung (20) ein globales Navigationssatellitensystem-Empfängermodul umfasst, und wobei die Benutzereinrichtung (20) mittels des globalen Navigationssatellitensystem-Empfängermoduls ihren geografischen Standort aus den Funksignalen erfasst oder berechnet, wobei vor oder zumindest teilweise während der Übertragung des Systems an die Benutzereinrichtung (20) mindestens ein Funksignal, das sich auf den Standort der Benutzereinrichtung (20) bezieht oder diesen anzeigt, die Benutzereinrichtung (20) mindestens einen Satz geografischer Konfigurationsinformationen empfängt, wobei die Benutzereinrichtung (20) die standortbezogenen Informationen auf der Grundlage seines geografischen Standorts und der geografischen Konfigurationsinformationen ableitet, wobei der mindestens eine Satz geografischer Konfigurationsinformationen Länderpolygonen und/oder Regionenpolygonen und/oder Teilen davon entspricht
-- die luft- oder raumgestützte Basisstationseinheit (111) wird von der Benutzereinrichtung (20) und im Hinblick auf die Netzauswahl und/oder Zellenauswahl in Abhängigkeit von den von der Benutzereinrichtung (20) abgeleiteten standortbezogenen Informationen verwendet, wobei die Benutzereinrichtung (20) konfiguriert ist, um auf der Grundlage der standortbezogenen Informationen zu entscheiden, ob sie sich in demselben Land befindet, wie es durch die von der luft- oder raumgestützten Basisstationseinheit (111) gesendete Kennung des öffentlichen mobilen Landnetzes angegeben wird, wobei für den Fall, dass sich die Benutzereinrichtung (20) nicht in demselben Land befindet, wie durch die Kennung des öffentlichen Land-Mobilfunknetzes angegeben, die Benutzereinrichtung (20) eine Netzauswahl und/oder Zellenauswahl unter Verwendung einer oder mehrerer terrestrischer Basisstationseinheiten (112, 113, 212) des Mobilkommunikationsnetzes (100) und/oder eines weiteren Mobilkommunikationsnetzes durchführt.

7. Programm, das einen computerlesbaren Programmcode umfasst, der bei Ausführung auf einer Benutzereinrichtung (20) die Benutzereinrichtung (20) veranlasst, ein Verfahren nach einem der Ansprüche 1 bis 4 durchzuführen.

8. Computerlesbares Medium, das Anweisungen enthält, die, wenn sie auf einer Benutzereinrichtung (20) ausgeführt werden, die Benutzereinrichtung (20) veranlassen, ein Verfahren nach einem der Ansprüche 1 bis 4 durchzuführen.

## Revendications

1. Procédé de sélection de réseau et/ou de cellule d'un équipement d'utilisateur (20) par rapport à un réseau de communication mobile (100), dans lequel le réseau de communication mobile (100) est associé à un réseau d'accès radio (110) comprenant au moins une entité de station de base (111) qui est une entité de station de base aérienne ou spatiale (111), dans lequel l'entité de station de base aérienne ou spatiale (111) diffuse un identificateur de réseau mobile terrestre public
dans lequel la sélection du réseau et/ou la sélection de la cellule de l'équipement utilisateur (20) est effectuée de manière dépendante de l'emplacement en fonction de l'emplacement de l'équipement utilisateur (20), dans lequel, afin d'effectuer la sélection du réseau et/ou la sélection de la cellule de cette manière en fonction de l'emplacement, le procédé comprend les étapes suivantes :
-- dans une première étape, l'équipement utilisateur (20) reçoit au moins un signal radio lié à l'emplacement de l'équipement utilisateur (20) ou indiquant cet emplacement, dans laquelle le au moins un signal radio correspond à
-- un signal radio reçu, par l'équipement utilisateur (20), d'une entité de station de base terrestre (112, 113, 212) du réseau de communication mobile (100) et/ou d'un autre réseau de communication mobile, l'équipement utilisateur (20) déduisant les informations relatives à l'emplacement sur la base d'un code de pays mobile diffusé par l'entité de station de base terrestre (112, 113, 212), ou
-- signaux radio reçus, par l'équipement utilisateur (20), d'un système mondial de navigation par satellite (200), dans lequel l'équipement utilisateur (20) comprend un module récepteur de système mondial de navigation par satellite, et dans lequel l'équipement utilisateur (20) détecte ou calcule, au moyen du module récepteur de système mondial de navigation par satellite, sa position géographique à partir des signaux radio , dans lequel, avant ou au moins en partie pendant la première étape, l'équipement utilisateur (20) reçoit, au moins un ensemble d'informations de configuration géographique, l'équipement utilisateur (20) déduisant les informations relatives à l'emplacement sur la base de son emplacement géographique et des informations de configuration géographique , dans lequel le au moins un ensemble au moins d'informations de configuration géographique correspond à des polygones de pays et/ou à des polygones de région et/ou à des parties de ceux-ci,
-- dans une deuxième étape, l'entité de station de base aérienne ou spatiale (111) est utilisée, par l'équipement d'utilisateur (20) et en vue de la sélection du réseau et/ou de la sélection de la cellule, en fonction des informations relatives à l'emplacement déduites par l'équipement d'utilisateur (20), l'équipement d'utilisateur (20) décidant, en fonction des informations relatives à l'emplacement, s'il est situé dans le même pays que celui indiqué par l'identificateur de réseau mobile terrestre public diffusé par l'entité de station de base aérienne ou spatiale (111), dans lequel, en cas où l'équipement utilisateur (20) n'est pas situé dans le même pays que celui indiqué par l'identifiant du réseau mobile terrestre public, l'équipement utilisateur (20) effectue une sélection de réseau et/ou une sélection de cellule en utilisant une ou plusieurs entités de station de base terrestre (112, 113, 212) du réseau de communication mobile (100) et/ou d'un autre réseau de communication mobile.

2. Procédé selon la revendication 1, dans lequel le ou les ensembles d'informations de configuration géographique correspondent à au moins une information de condition de réception concernant au moins un signal radio ou des signaux radio reçus, par l'équipement utilisateur (20), d'au moins deux des entités de station de base supplémentaires (112, 113, 212), dans lequel l'équipement utilisateur (20) déduit l'information relative à l'emplacement sur la base d'au moins un signal radio ou des signaux radio d'au moins deux des entités de station de base supplémentaires (112, 113, 212),
dans lequel la au moins une information sur les conditions de réception concernant les au moins deux autres entités de station de base (112, 113, 212) correspond à des valeurs de décalage de l'intensité du signal à appliquer pour déduire les informations relatives à l'emplacement.

3. Procédé selon la revendication 1 ou 2, dans lequel le ou les ensembles d'informations de configuration géographique sont reçus par l'équipement utilisateur (20) et/ou stockés dans l'équipement utilisateur (20) selon au moins l'un des mécanismes suivants :
-- l'ensemble ou les ensembles d'informations de configuration géographique, en particulier les polygones de pays et/ou les polygones de région et/ou des parties de ceux-ci, sont préconfigurés dans le logiciel de l'équipement utilisateur (20), soit au moment de la production, soit au moyen d'une mise à jour du logiciel, en particulier par voie hertzienne ,
-- l'ensemble ou les ensembles d'informations de configuration géographique, en particulier les polygones de pays et/ou les polygones de région et/ou des parties de ceux-ci, est/sont reçu(s) par l'équipement utilisateur (20) via un canal de diffusion d'au moins une entité de station de base (111) et/ou d'une ou de plusieurs autres entités de station de base (112, 113, 212) du réseau de communication mobile (100), en particulier via le canal de commande de diffusion et/ou en utilisant un ou plusieurs blocs d'informations de système, en particulier un bloc d'informations de système dédié à la transmission d'informations de configuration géographique.

4. Procédé selon l'une des revendications précédentes, dans lequel le ou les ensembles d'informations de configuration géographique transmis à l'équipement utilisateur (20) par au moins une entité de station de base (111) et/ou par au moins une autre entité de station de base (112, 113, 212) correspondent à une zone géographique limitée dans le voisinage de la au moins une entité de station de base (111) ou de la au moins une autre entité de station de base (112, 113, 212), respectivement, et/ou dans le voisinage de l'équipement utilisateur (20) ,
l'ensemble ou les ensembles d'informations de configuration géographique indiquent en particulier les entités de station de base disponibles et/ou les réseaux de communication mobile disponibles dans le cas où l'emplacement déduit de l'équipement d'utilisateur (20) correspond à un ou plusieurs ensembles d'informations de configuration géographique.

5. Équipement utilisateur (20) pour effectuer une sélection de réseau et/ou une sélection de cellule concernant un réseau de communication mobile (100), le réseau de communication mobile (100) étant associé à un réseau d'accès radio (110) comprenant au moins une entité de station de base (111) étant une entité de station de base basée dans l'air ou dans l'espace (111),
dans lequel l'équipement utilisateur (20) est configuré pour réaliser une sélection de réseau et/ou une sélection de cellule de manière dépendante de l'emplacement en fonction de l'emplacement de l'équipement utilisateur (20), dans lequel l'équipement utilisateur (20) est configuré pour recevoir un identifiant de réseau mobile terrestre public diffusé par l'entité de station de base aérienne ou spatiale (111),
dans lequel, afin de réaliser la sélection de réseau et/ou la sélection de cellule de cette manière en fonction de l'emplacement, l'équipement utilisateur (20) est configuré :
-- pour recevoir au moins un signal radio lié à l'emplacement de l'équipement utilisateur (20) ou indiquant cet emplacement, l'au moins un signal radio correspondant à
-- un signal radio reçu, par l'équipement utilisateur (20), d'une entité de station de base terrestre (112, 113, 212) du réseau de communication mobile (100) et/ou d'un autre réseau de communication mobile, l'équipement utilisateur (20) déduisant les informations relatives à l'emplacement sur la base d'un code de pays mobile diffusé par l'entité de station de base terrestre (112, 113, 212), ou
-- des signaux radio reçus, par l'équipement utilisateur (20), d'un système mondial de navigation par satellite (200), dans lequel l'équipement utilisateur (20) comprend un module récepteur de système mondial de navigation par satellite, et dans lequel l'équipement utilisateur (20) détecte ou calcule, au moyen du module récepteur de système mondial de navigation par satellite, sa position géographique à partir du signal radio, dans lequel, avant ou au moins en partie pendant la réception d'au moins un signal radio lié à la position de l'équipement utilisateur (20) ou indiquant cette position, l'équipement utilisateur (20) reçoit au moins un ensemble d'informations de configuration géographique, l'équipement utilisateur (20) déduisant les informations relatives à l'emplacement sur la base de son emplacement géographique et des informations de configuration géographique, dans lequel le au moins un ensemble d'informations de configuration géographique correspond à des polygones de pays et/ou à des polygones de région et/ou à des parties de ces polygones
-- d'utiliser l'entité de station de base aérienne ou spatiale (111) en vue de la sélection du réseau et/ou de la cellule en fonction des informations relatives à l'emplacement déduites par l'équipement d'utilisateur (20), l'équipement d'utilisateur (20) étant configuré pour décider, sur la base des informations relatives à l'emplacement, s'il est situé dans le même pays que celui indiqué par l'identificateur de réseau mobile terrestre public diffusé par l'entité de station de base aérienne ou spatiale (111), dans lequel en cas où l'équipement utilisateur (20) n'est pas situé dans le même pays que celui indiqué par l'identifiant du réseau mobile terrestre public, l'équipement utilisateur (20) est en outre configuré pour effectuer une sélection de réseau et/ou une sélection de cellule à l'aide d'une ou de plusieurs entités de station de base terrestre (112, 113, 212) du réseau de communication mobile (100) et/ou d'un autre réseau de communication mobile.

6. Système comprenant un équipement d'utilisateur (20), un réseau de communication mobile (100) et un système mondial de navigation par satellite (200), dans lequel le réseau de communication mobile (100) est associé à un réseau d'accès radio (110) comprenant au moins une entité de station de base (111) qui est une entité de station de base aérienne ou spatiale (111), dans laquelle l'entité de station de base aérienne ou spatiale (111) diffuse un identificateur de réseau mobile terrestre public
dans lequel le système est configuré pour permettre la sélection du réseau et/ou la sélection de la cellule de l'équipement utilisateur (20) de manière dépendante de l'emplacement en fonction de l'emplacement de l'équipement utilisateur (20),
dans lequel , afin d'effectuer la sélection de réseau et/ou la sélection de cellule de cette manière en fonction de l'emplacement, le système est configuré de telle sorte que :
-- le système transmet à l'équipement utilisateur (20) au moins un signal radio lié à l'emplacement de l'équipement utilisateur (20) ou indiquant cet emplacement, l'au moins un signal radio correspondant à
-- un signal radio reçu, par l'équipement utilisateur (20), d'une entité de station de base terrestre (112, 113, 212) du réseau de communication mobile (100) et/ou d'un autre réseau de communication mobile, l'équipement utilisateur (20) déduisant les informations relatives à l'emplacement sur la base d'un code de pays mobile diffusé par l'entité de station de base terrestre (112, 113, 212), ou
-- des signaux radio reçus, par l'équipement utilisateur (20), d'un système mondial de navigation par satellite (200), dans lequel l'équipement utilisateur (20) comprend un module récepteur de système mondial de navigation par satellite, et dans lequel l'équipement utilisateur (20) détecte ou calcule, au moyen du module récepteur de système mondial de navigation par satellite, sa position géographique à partir des signaux radio, dans lequel, avant ou au moins en partie pendant la transmission, par le système et vers l'équipement utilisateur (20), au moins un signal radio lié à l'emplacement de l'équipement utilisateur (20) ou indiquant cet emplacement, l'équipement utilisateur (20) reçoit au moins un ensemble d'informations de configuration géographique, l'équipement utilisateur (20) déduisant les informations liées à l'emplacement sur la base de son emplacement géographique et des informations de configuration géographique, dans lequel le au moins un ensemble d'informations de configuration géographique correspondant à des polygones de pays et/ou à des polygones de région et/ou à des parties de ceux-ci
-- l'entité de station de base aérienne ou spatiale (111) est utilisée, par l'équipement d'utilisateur (20) et en vue de la sélection du réseau et/ou de la sélection de la cellule, en fonction des informations relatives à l'emplacement déduites par l'équipement d'utilisateur (20), l'équipement d'utilisateur (20) étant configuré pour décider, en fonction des informations relatives à l'emplacement, s'il est situé dans le même pays que celui indiqué par l'identificateur de réseau mobile terrestre public diffusé par l'entité de station de base aérienne ou spatiale (111), dans le cas où l'équipement utilisateur (20) n'est pas situé dans le même pays que celui indiqué par l'identifiant du réseau mobile terrestre public, l'équipement utilisateur (20) effectue une sélection de réseau et/ou une sélection de cellule en utilisant une ou plusieurs entités de station de base terrestre (112, 113, 212) du réseau de communication mobile (100) et/ou d'un autre réseau de communication mobile.

7. Programme comprenant un code de programme lisible par ordinateur qui, lorsqu'il est exécuté à l'adresse sur un équipement utilisateur (20), permet à l'équipement utilisateur (20) d'exécuter une méthode selon l'une des revendications 1 à 4.

8. Support lisible par ordinateur comprenant des instructions qui, lorsqu'elles sont exécutées sur un équipement utilisateur (20), amènent l'équipement utilisateur (20) à exécuter une méthode selon l'une des revendications 1 à 4.
